(19) Europäisches Patentamt / European Patent Office / Office européen des brevets

(11) **EP 3 980 802 B1**

(12) **FASCICULE DE BREVET EUROPEEN**

(45) Date de publication et mention de la délivrance du brevet:
**05.07.2023 Bulletin 2023/27**

(21) Numéro de dépôt: **20729793.8**

(22) Date de dépôt: **05.06.2020**

(51) Classification Internationale des Brevets (IPC):
**G01S 7/02** $^{(2006.01)}$

(52) Classification Coopérative des Brevets (CPC):
**G01S 7/021**

(86) Numéro de dépôt international:
**PCT/EP2020/065657**

(87) Numéro de publication internationale:
**WO 2020/245380 (10.12.2020 Gazette 2020/50)**

(54) **PROCÉDÉ DE REGROUPEMENT DES IMPULSIONS INTERCEPTÉES PAR UN SYSTÈME D'ÉCOUTE; PRODUIT PROGRAMME D'ORDINATEUR ET SUPPORT LISIBLE D'INFORMATIONS ASSOCIÉS**

VERFAHREN ZUM GRUPPIEREN DER VON EINEM HÖRSYSTEM ABGEFANGENEN IMPULSE, ZUGEHÖRIGES COMPUTERPROGRAMMPRODUKT UND LESBARES INFORMATIONSMEDIUM

METHOD FOR GROUPING PULSES INTERCEPTED BY A LISTENING SYSTEM; ASSOCIATED COMPUTER PROGRAM PRODUCT AND READABLE INFORMATION MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2019 FR 1906069**

(43) Date de publication de la demande:
**13.04.2022 Bulletin 2022/15**

(73) Titulaire: **THALES**
**92400 Courbevoie (FR)**

(72) Inventeurs:
• **ENDERLI, Cyrille**
**78851 Elancourt Cedex (FR)**
• **BEREUX, François**
**78851 Elancourt Cedex (FR)**

(74) Mandataire: **Lavoix**
**2, place d'Estienne d'Orves**
**75441 Paris Cedex 09 (FR)**

(56) Documents cités:
**CN-A- 109 799 483     US-A1- 2006 132 348**
**US-A1- 2019 162 818**

• **BILLUR BARSHAN ET AL: "Automatic Radar Antenna Scan Type Recognition in Electronic Warfare", IEEE TRANSACTIONS ON AEROSPACE AND ELECTRONIC SYSTEMS, IEEE SERVICE CENTER, PISCATAWAY, NJ, US, vol. 48, no. 4, 1 octobre 2012 (2012-10-01), pages 2908-2931, XP011467219, ISSN: 0018-9251, DOI: 10.1109/TAES.2012.6324669**

**Description**

La présente invention concerne le domaine de l'écoute électromagnétique, et, plus précisément, celui de l'analyse post-mission des enregistrements des paramètres descripteurs des impulsions interceptées.

Dans ce domaine, on connait les documents de brevet US 2006/132348 A1, US 2019/162818 A1, CN 109 799 483 A, ainsi que l'article B. Barshan and B. Eravci, "Automatic Radar Antenna Scan Type Recognition in Electronic Warfare," in IEEE Transactions on Aerospace and Electronic Systems, vol. 48, no. 4, pp. 2908-2931, octobre 2012, doi: 10.1 109/TAES.2012.6324669.

L'analyse post-mission d'un fichier d'enregistrements comportant des mesures de grandeurs caractéristique pour chaque impulsion interceptée doit permettre de regrouper un maximum d'impulsions en tant qu'impulsions émises par un même émetteur ou source. Ceci afin notamment de constituer une base de données fiable d'émetteurs radar.

Cette analyse doit se faire sans aucune connaissance *a priori* sur les émetteurs et la forme des ondes électromagnétiques qu'ils émettent.

On admet que toutes les impulsions d'un fichier d'enregistrements ne sont pas regroupées par l'analyse post-mission, mais on veut que les impulsions regroupées le soient de manière très sûre, car la base de données ainsi constituée est destinée à être utilisée ultérieurement comme connaissance *a priori,* soit pour compléter l'analyse du même fichier, soit pour analyser de nouveaux fichiers.

Le regroupement d'impulsions (ou « clustering » en anglais) relève typiquement d'un algorithme d'intelligence artificielle non supervisée, de type regroupement sur des séries temporelles multi-paramètres.

Le regroupement d'impulsions correspond, dans le domaine de la guerre électronique, à des méthodes de « désentrelacement non supervisé », où on suppose ne pas disposer d'informations *a priori* sur les formes d'onde des impulsions interceptées en terme de fréquence porteuse, différences de temps d'arrivée entre impulsions successives (« Differential Time of Arrival » - DTOA), durées d'impulsion, etc.

Les méthodes les plus anciennes et les plus répandues exploitent cependant des périodicités supposées dans les formes d'onde, ce qui constitue une forme plus ou moins implicite de connaissance *a priori* minimale.

Un très grand nombre de méthodes se basent ainsi sur des histogrammes de DTOA, consistant essentiellement à former une fonction d'autocorrélation de la séquence des temps d'arrivée afin d'extraire les impulsions réparties dans le temps avec un degré de périodicité variable, c'est-à-dire de manière strictement périodique ou sous forme de motifs d'émissions quelconques répétés périodiquement. D'autres paramètres que le DTOA peuvent être utilisés en complément.

Les histogrammes de DTOA présentent l'inconvénient de comporter des ambiguïtés dues aux multiples entiers des périodes présentes et des inter-corrélations entre périodes différentes. Différentes variantes sont connues pour rendre les approches par histogrammes de DTOA plus robustes, telles que celles se basant sur l'extraction de motifs ou sur leur transformée de Fourier. Ces variantes ont des inconvénients en termes de temps de calcul et/ou en termes de performances dégradées quand des impulsions sont manquées dans les motifs interceptés ou que l'émetteur est agile et que la fréquence des impulsions varie d'une impulsion à l'autre. Une autre variante connue est fondée sur l'extraction de modes d'histogrammes à faible complexité.

La formation et le seuillage des histogrammes étant délicats quand les paramètres sont variables d'impulsions à impulsions, d'autres méthodes répandues dans l'état de l'art visent à éviter l'utilisation des histogrammes. Elles consistent à appliquer, avec des adaptations pertinentes, des algorithmes de regroupement issus du domaine de l'intelligence artificielle.

L'essentiel de ces méthodes sont les K-moyennes, les méthodes basées sur une notion de densité locale, notamment DBSCAN (selon le terme anglais « density-based spatial clustering of applications with noise ») et ses variantes, le regroupement spectral ou encore les réseaux de neurones de type SOM (« Self Organizing Maps »), avec éventuellement de la logique floue.

Ces différentes méthodes peuvent être appliquées à des n-uplets de plusieurs paramètres mesurés sur les impulsions interceptées. Toutes ces méthodes reposent sur des notions de similarité entre impulsions, qui est fondée sur une notion de distance arbitraire (la plupart du temps euclidienne). Or, cette distance n'est pas adaptée au modèle du signal reçu et conduit en conséquence à des performances limitées.

Le regroupement par vecteurs supports est une méthode alternative dans laquelle la notion de distance diffère de celle de distance euclidienne. Son paramétrage est cependant difficile. De plus la distance est à définir par l'utilisateur via l'introduction d'un noyau de produit scalaire (« kernel ») dont le choix est délicat.

Le but de l'invention est de résoudre ce problème de regroupement des impulsions interceptées en proposant un procédé alternatif à ceux de l'état de la technique.

Pour cela l'invention a pour objet un procédé de regroupement des impulsions interceptées par un système d'écoute, en analysant un fichier d'enregistrements comportant des mesures de grandeurs associées à chacune des impulsions interceptées, les grandeurs associées à l'impulsion interceptée d'indice k comportant au moins un niveau $n_k$ et un temps d'arrivée $t_k$, ledit procédé regroupant les impulsions interceptées dans C groupes, C étant un entier égal ou supérieur à 1, les impulsions regroupées dans un groupe étant considérées comme ayant été émises par une même source munie d'une antenne radar fonctionnant en balayage, caractérisé en ce que le procédé de regroupement comporte les étapes consistant à :

- sélectionner, à partir du fichier d'enregistrements, des fenêtres d'analyse de durée limitée pour réduire le nombre d'impulsions à analyser simultanément, une fenêtre comportant $K$ impulsions, $K$ étant un entier égal ou supérieur à 3 ; et, pour chaque fenêtre d'analyse ;

  - mettre un oeuvre, à partir d'une modélisation fondée sur une régression quadratique des niveaux des impulsions en fonction du temps d'arrivée des impulsions interceptées appartenant à un même groupe, couplée à un modèle de mélange des groupes, ladite modélisation pouvant se mettre sous la forme :

$$n_k = \begin{cases} \boldsymbol{T}'_k \boldsymbol{\theta}^{(1)} + w_k & \text{si} \quad z_{k,1} = 1 \\ \quad\quad ... \\ \boldsymbol{T}'_k \boldsymbol{\theta}^{(C)} + w_k & \text{si} \quad z_{k,C} = 1 \end{cases}, \quad k = 1 ... K$$

où $\boldsymbol{T_k}$ est le vecteur de taille $\begin{pmatrix} t_k^2 \\ t_k \\ 1 \end{pmatrix}$, où $\theta^{(c)} = (\alpha^{(c)}, \beta^{(c)}, \gamma^{(c)})$, $c = 1 ... C$, où $w_k$ est une suite d'échantillons de bruit, et où les variables indicatrices $z_{k,c}$ valent 1 si la k-ème impulsion appartient au groupe $c$ et 0 sinon, un algorithme itératif d'estimation des paramètres de la modélisation selon un principe de maximisation d'une vraisemblance, les paramètres de la modélisation étant constitués par le nombre de groupes $C$, les coefficients de la régression quadratique $\theta^{(c)}$ pour chaque groupe c, d'une variance du bruit de mesure $\sigma^2$, et les variables indicatrices du mélange $z_{k,c}$ ; et,

- regrouper les impulsions selon les valeurs estimées des variables indicatrices du mélange.

Suivant des modes particuliers de réalisation, le procédé comporte une ou plusieurs des caractéristiques suivantes, prises isolément ou suivant toutes les combinaisons techniquement possibles :

- le nombre de groupes $C$ est estimé séparément, en considérant successivement plusieurs hypothèses sur la valeur de $C$ ;
- les paramètres de la modélisation que sont les coefficients de la régression quadratique pour chaque groupe, de la variance du bruit de mesure, et les variables indicatrices du mélange sont estimées en utilisant un algorithme « Expectation-Maximization » - E-M, consistant à itérer successivement une étape « M » et une étape « E », l'étape « M » consistant à calculer :

$$\widehat{\boldsymbol{p}} = \frac{1}{K} \sum_{k=1}^{K} \boldsymbol{z}_k \ ,$$

$$\widehat{\sigma^2} = \frac{1}{K} \sum_{k=1}^{K} \left( n_k - \boldsymbol{T}'_k \widehat{\boldsymbol{\theta}} \boldsymbol{z}'_k \right)^2 \ ,$$

$$\widehat{\theta^{(c)}} = \left( \sum_{k=1}^{K} z_{k,c} \boldsymbol{T}_k \boldsymbol{T}'_k \right)^{-1} \left( \sum_{k=1}^{K} z_{k,c} n_k \boldsymbol{T}_k \right) \ , \quad c = 1 ... C$$

où $\hat{\boldsymbol{p}}$ est l'estimation du vecteur $\boldsymbol{p} = (p_1,...,p_c,..., p_C)$ des probabilités marginales des C groupes, $\widehat{\sigma^2}$ est l'estimation de la variance du bruit de mesure;
et l'étape « E » consistant à calculer les espérances $E(z_{k,c})$ des valeurs des variables indicatrices $z_{k,c}$, selon les relations suivantes:

$$E\left( z_{k,c} \right) = \frac{e^{\delta_{k,c}}}{\sum_{c'=1}^{C} e^{\delta_{k,c'}}} \quad \text{où} \quad \delta_{k,c} = \frac{n_k \boldsymbol{T}'_k \theta^{(c)}}{\sigma^2} - \frac{\left( \boldsymbol{T}'_k \theta^{(c)} \right)^2}{2\sigma^2} + \ln p_c$$

puis à substituer aux valeurs des variables indicatrices $z_{k,c}$ leurs espérances $E(z_{k,c})$ pour l'itération suivante de l'étape « M » ;

- l'initialisation de l'algorithme E-M consiste soit à initialiser aléatoirement les paramètres $\Theta$, $\boldsymbol{p}$, $\sigma^2$, *soit* à initialiser les paramètres $\Theta$, $\boldsymbol{p}$, $\sigma^2$ avec les résultats d'une méthode de regroupement standard ;
- les grandeurs primaires comportent au moins une grandeur supplémentaire, de préférence sélectionnée parmi un azimut, une durée d'impulsion et une fréquence porteuse d'une impulsion interceptée ;
- procédé dans lequel, pour tenir compte de la j-ème grandeur supplémentaire $x_{k,j}$ parmi $m$ grandeurs supplémentaires, dans les itérations de l'algorithme E-M,

l'étape « M » consiste à calculer également :

$$\boldsymbol{M}_{:c} = \frac{\sum_{k=1}^{K} z_{k,c} x_k}{\sum_{k=1}^{K} z_{k,c}} \quad , \qquad c = 1 \dots C,$$

$$\Lambda_{j,j} = \frac{1}{K} \sum_{k=1}^{K} \left( x_{k,j}{}^2 - \sum_{c=1}^{C} z_{k,c} M_{j,c}^2 \right) , \ j = 1 \dots m$$

Où $\boldsymbol{M}_{:c}$ désigne la c-ème colonne de $\boldsymbol{M}$ et $\Lambda_{jj}$ le j-ème terme diagonal de $\Lambda$, et l'étape « E » consiste à calculer :

$$E\left( z_{k,c} \right) = \frac{e^{\delta_{k,c}}}{\sum_{c'=1}^{C} e^{\delta_{k,c'}}}$$

Où $\delta_{k,c} = \frac{n_k T_k' \theta^{(c)}}{\sigma^2} - \frac{\left( T_k' \theta^{(c)} \right)^2}{2\sigma^2} + \ln p_c + \sum_{j=1}^{m} \frac{x_k(j) M_{j,c}}{\Lambda_{j,j}} - \frac{M_{j,c}^2}{2\Lambda_{j,j}} .$

- une fenêtre d'analyse est définie pour chaque sous-bande du domaine de fréquence sur lequel fonctionne le système d'écoute ;
- le regroupement est réalisé sans aucune information sur les formes d'onde des impulsions interceptées ; et

L'invention a également pour objet un produit programme d'ordinateur comprenant un support lisible d'informations, sur lequel est mémorisé un programme d'ordinateur comprenant des instructions de programme, le programme d'ordinateur étant chargeable dans des moyens de mémorisation d'un calculateur et exécutable par des moyens de calcul dudit calculateur pour mettre en oeuvre un procédé de regroupement conforme au procédé précédent.

L'invention a également pour objet un support lisible d'informations sur lequel est mémorisé un programme d'ordinateur comprenant des instructions de programme, le programme d'ordinateur étant chargeable dans des moyens de mémorisation d'un calculateur et exécutable par des moyens de calcul dudit calculateur pour mettre en oeuvre un procédé de regroupement conforme au procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

[Fig 1] La figure 1 est constitué de quatre graphes temps/niveau pour quatre fenêtres d'analyse d'un fichier d'enregistrements ;

[Fig 2] La figure 2 est une représentation sous forme de blocs d'un premier mode de réalisation du procédé selon l'invention, qui ne fait usage que des niveaux des impulsions et leurs temps d'arrivée.

Le procédé selon l'invention exploite le fait qu'il existe une relation parabolique entre les temps d'arrivée et les niveaux des impulsions interceptées par le système d'écoute.

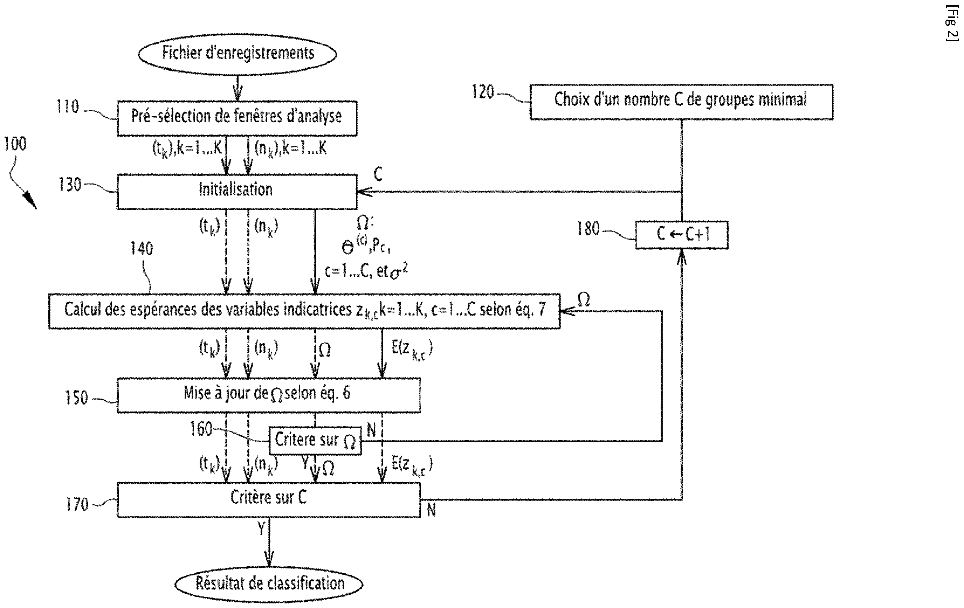

Dans ce qui suit, seront en premier lieu présentées les considérations mathématiques sur lesquelles est fondé le procédé selon l'invention. Celui-ci sera décrit en second lieu en se référant à la figure 2.

Pour réduire le nombre d'impulsions à traiter simultanément, on constate tout d'abord que l'intervalle de temps entre deux impulsions provenant d'une même source est limité. Sachant que les périodes les plus grandes de répétition des impulsions sont généralement de l'ordre de quelques ms (par exemple 5 ms), des fenêtres d'analyse sont définies. Une fenêtre rassemble les impulsions successives telles que l'espacement entre une impulsion et la suivante est inférieur à un espacement seuil, par exemple fixé à 5 ms.

Pour disposer de suffisamment d'impulsions dans chaque fenêtre d'analyse, ne sont conservées que les fenêtres qui contiennent un nombre minimum d'impulsions, par exemple fixé à 10 impulsions.

Le fichier d'enregistrements est ainsi réduit en une suite de fenêtres d'analyse, de durée variable, dans lesquelles il peut y avoir un passage de lobe ou plusieurs passages de lobes entrelacés les uns aux autres.

Le procédé effectue un regroupement (ou « clustering ») des impulsions d'une même fenêtre d'analyse.

Une source émet des impulsions, dont certaines sont interceptées par l'antenne du système d'écoute.

Pour chaque impulsion interceptée, les enregistrements correspondants sont constitués des mesures de temps d'arrivée et de niveau des impulsions, ainsi éventuellement que d'autres mesures, telles que azimut, durée d'impulsion et fréquence porteuse.

Le gain de l'antenne radar de l'émetteur se caractérise par un diagramme qui présente au moins un lobe. L'antenne radar de l'émetteur fonctionnant en balayage, le lobe de l'antenne éclaire le récepteur du système d'écoute avec une puissance qui dépend du temps. Le niveau des impulsions émises par l'émetteur et interceptées par le système d'écoute est alors modélisable par une fonction du temps d'arrivée des impulsions. Dans ce qui suit, est illustré le cas d'une modélisation par une parabole. Cette modélisation est fondée sur une caractéristique qui est indépendante de la forme d'onde des impulsions.

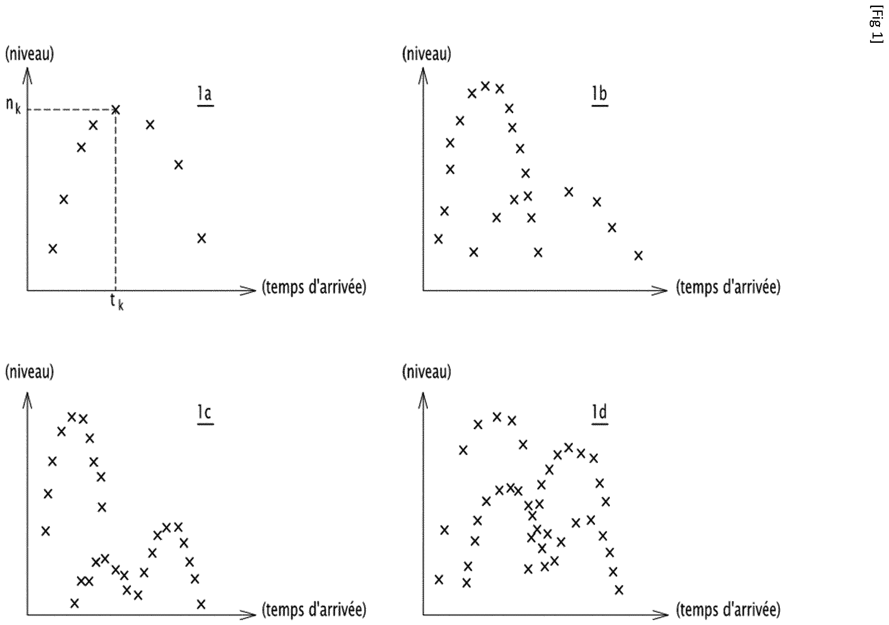

La figure 1 représente quatre graphes du niveau N en fonction du temps d'arrivée T, respectivement associés à des fenêtres d'analyse de durée de l'ordre de 10 à 40 ms, les graphes comportant des impulsions réparties selon une parabole (graphe 1a), deux paraboles (graphe 1b), trois paraboles (graphe 1c) et quatre paraboles (graphe 1d). Ces quatre situations représentent la grande majorité des cas observés.

Ainsi, les impulsions interceptées qui sont émises par une même source constituent un échantillonnage bruité d'une parabole, que les temps d'arrivées de ces impulsions soient régulièrement espacés ou non, que certaines impulsions soient manquantes ou non, ou bien encore que les fréquences porteuses soient agiles ou non.

Si une source est agile en fréquence de sorte que la variation de la fréquence porteuse d'une impulsion à l'autre est importante et que l'antenne du système d'écoute n'est pas calibrée convenablement sur toute la gamme de fréquence, la forme parabolique peut s'en trouver légèrement déformée. Néanmoins, la modélisation par une parabole bruitée reste suffisamment précise.

Dans un premier mode de réalisation, le temps d'arrivée et le niveau sont les deux seuls paramètres mesurés qui sont considérés pour regrouper les impulsions. Un second mode de réalisation, qui sera décrit ensuite, utilise, en plus du temps d'arrivée et du niveau, les trois autres paramètres mesurés que sont l'azimut, la durée d'impulsion et la fréquence porteuse. Ce second mode de réalisation permet d'améliorer le regroupement.

Dans le premier mode de réalisation, les paramètres mesurés pour la k-ème impulsion de la fenêtre d'analyse considérée sont notés $t_k$ pour le temps d'arrivée et $n_k$ pour le niveau, où $k$ est un entier entre 1 et K, K étant le nombre total d'impulsions dans la fenêtre d'analyse considérée.

Selon la modélisation des niveaux par une parabole du temps d'arrivée, et en considérant dans un premier temps que les impulsions proviennent d'une même source (et par conséquent sont à regrouper dans un même groupe, ou « cluster »), les niveaux sont liés aux temps par une relation parabolique et un bruit (de mesure et/ou de modèle), aussi dénommée régression quadratique :

$$n_k = \alpha t_k^2 + \beta t_k + \gamma + w_k , \quad k = 1 \dots K,$$

où $w_k$ est une suite d'échantillons de bruit qu'on suppose identiquement gaussiens et indépendants ; $(\alpha, \beta, \gamma)$ sont les paramètres de la régression quadratique (c'est-à-dire les paramètres de la parabole associée à une source, ou à un groupe, ces paramètres étant *a priori* différents pour une autre source, ou un autre groupe).

On peut écrire cette relation sous forme matricielle :

$$n_k = \boldsymbol{T}'_k \boldsymbol{\theta} + w_k , \quad k = 1 \dots K \qquad\qquad \text{(eq. 1)}$$

Où $\theta$ est le vecteur des paramètres $(\alpha, \beta, \gamma)$ et $\boldsymbol{T_k}$ est le vecteur de taille (3, 1) : $\begin{pmatrix} t_k^2 \\ t_k \\ 1 \end{pmatrix}$ ; et où $\boldsymbol{A}'$ dénote la transposée de la grandeur vectorielle $\boldsymbol{A}$.

S'il n'y a qu'une seule source et au moins trois impulsions non alignées sur le graphe temps/niveau, les paramètres $(\alpha, \beta, \gamma)$ sont classiquement donnés par le théorème de projection :

$$\hat{\boldsymbol{\theta}} = (\boldsymbol{T}'\boldsymbol{T})^{-1}\boldsymbol{T}'\boldsymbol{n} \qquad\qquad \text{(eq. 2)}$$

Où $\hat{A}$ dénote l'estimation de la grandeur $A$ ; où $\boldsymbol{T}$ est la matrice de taille $(K, 3)$ ayant le coefficient $t_k^{3-s}$ dans la ligne k et la colonne s ; et $\boldsymbol{n}$ est le vecteur de taille $(K, 1)$ des niveaux $n_k$.

Plus généralement, si $C$ désigne le nombre (inconnu) de sources (et donc de groupes) pour lesquelles des impulsions se trouvent dans la fenêtre d'analyse considérée, la suite des niveaux $n_k$ reçus est modélisée par un mélange.

En introduisant les variables indicatrices $z_{k,c}$ valant 1 si la k-ème impulsion appartient au cluster c et 0 sinon, avec $k = 1 \ldots K$ et $c = 1 \ldots C$, on a :

$$n_k = \begin{cases} \boldsymbol{T}'_k \boldsymbol{\theta}^{(1)} + w_k & \text{si} \quad z_{k,1} = 1 \\ \qquad\qquad \ldots \\ \boldsymbol{T}'_k \boldsymbol{\theta}^{(C)} + w_k & \text{si} \quad z_{k,C} = 1 \end{cases}, \quad k = 1 \ldots K, \qquad \text{(eq. 3)}$$

Dans cette équation, les paramètres $\theta^{(c)} = (\alpha^{(c)}, \beta^{(c)}, \gamma^{(c)})$, $c = 1 \ldots C$, caractérisent un groupe et diffèrent d'une source à l'autre dans la fenêtre d'analyse.

Dans un souci de concision d'écriture, on concatène les vecteurs $\theta^{(c)}$ dans les colonnes d'une matrice $\Theta$ de taille $(3, C)$.

Dans l'équation précédente, les variables indicatrices $(z_{k,1}, \ldots, z_{k,c}, \ldots, z_{k,C}) = \boldsymbol{z}_k$ sont décrites par un modèle multinomial de paramètres $(p_1, \ldots, p_c, \ldots, p_C) = \boldsymbol{p}$. Ces derniers correspondent aux probabilités marginales des $C$ groupes, où $p_c$ est la probabilité que $z_{k,c} = 1$ et $z_{k,c'} = 0$ pour c'≠c. On a : $p_1 + \ldots + p_c + \ldots + p_C = 1$

Le modèle statistique des niveaux mesurés par le système d'écoute, conjoints aux variables indicatrices, est alors le suivant :

$$p(n_k, \boldsymbol{z}_k | C, \boldsymbol{\Theta}, \boldsymbol{p}, \sigma^2) = \frac{1}{\sigma\sqrt{2\pi}} exp\left(-\frac{1}{2\sigma^2}[n_k - \boldsymbol{T}'_k \boldsymbol{\Theta} \boldsymbol{z}'_k]^2\right) \prod_{c=1}^{C} p_c^{z_{k,c}} \quad \text{(eq. 4)}$$

Où $\sigma^2$ est la variance du bruit $w_k$ dans la modélisation de l'équation 3 supposée inconnue.

Le modèle statistique signifie que, conditionnellement aux $C$ valeurs $z_{k,c}$, le niveau mesuré $n_k$ de la k-ème impulsion est une régression quadratique avec les paramètres associés au cluster $c^*$ tel que $z_{k,c^*} = 1$.

Pour l'ensemble de $K$ valeurs de niveaux dans une fenêtre d'analyse et pour $C$ clusters, le modèle statistique est le produit des densités individuelles $p(n_k, \boldsymbol{z}_k | C, \Theta, \boldsymbol{p}, \sigma^2)$ :

$$p(\boldsymbol{n}, \boldsymbol{Z} | C, \boldsymbol{\Theta}, \boldsymbol{p}, \sigma^2) = \prod_{k=1}^{K} p(n_k, \boldsymbol{z}_k | C, \boldsymbol{\Theta}, \boldsymbol{p}, \sigma^2) \qquad \text{(eq. 5)}$$

Où $\boldsymbol{Z}$ est la matrice de taille $(K, C)$ dont les coefficients sont les $z_{k,c}$ pour k entre 1 et K et c entre 1 et C.

Etant donné une suite de valeurs des couples $(t_k, n_k)$ dans une fenêtre d'analyse et un nombre supposé de groupes $C$, le problème de regroupement consiste alors à estimer les paramètres des régressions quadratiques regroupés dans la matrice $\Theta$, les probabilités marginales des $C$ groupes regroupées dans le vecteur $\boldsymbol{p}$, et la variance du bruit de mesure $\sigma^2$. Ces estimations doivent être faites en l'absence des valeurs des variables indicatrices $z_{k,c}$, qui ne sont pas observées.

L'estimation du nombre de groupes $C$ est avantageusement traitée à part en considérant successivement plusieurs hypothèses sur la valeur de $C$.

Pour l'estimation des autres paramètres, le procédé met en oeuvre un algorithme E-M (« Expectation-Maximization ») connu de l'homme du métier. Un tel algorithme est par exemple présenté dans l'article de A.P. Dempster et al., "Maximum Likelihood from incomplète Data via the EM Algoithm", J. Roy. Satist., vol B-39, pp.1-38, 1977.

L'algorithme E-M est une méthode générale de maximisation de la vraisemblance des paramètres d'un modèle en présence de données incomplètes.

Ici, les données incomplètes sont les variables $z_{k,c}$ indicatrices d'appartenance des impulsions aux groupes. Si ces dernières étaient observées, on montre que les estimations des paramètres, à nombre $C$ de groupes donné, seraient :

$$\widehat{p} = \frac{1}{K} \sum_{k=1}^{K} z_k \ ,$$

$$\widehat{\sigma^2} = \frac{1}{K} \sum_{k=1}^{K} \left(n_k - T_k' \widehat{\Theta} z_k'\right)^2 \ , \qquad\qquad (\text{eq. 6})$$

$$\widehat{\theta^{(c)}} = \left(\sum_{k=1}^{K} z_{k,c} T_k T_k'\right)^{-1} \left(\sum_{k=1}^{K} z_{k,c} n_k T_k\right) \ , \quad c = 1 \dots C.$$

Ces équations correspondent à l'étape dite « M » de l'algorithme E-M. Cette étape consiste à calculer les estimations du maximum de vraisemblance avec les données complètes, c'est-à-dire ici en supposant observées les valeurs des niveaux $n_k$ ainsi que les variables indicatrices $z_{k,c}$.

Dans ces équations, le rôle des $z_{k,c}$ est de sélectionner les données d'un même groupe et d'y appliquer les formules de régression classiques.

L'étape dite « E » de l'algorithme E-M consiste alors à remplacer les valeurs non observées des $z_{k,c}$ par leurs espérances $E(z_{k,c})$.

On peut montrer que l'espérance de la variable indicatrice $z_{k,c}$ est donnée par l'expression :

$$E\left(z_{k,c}\right) = \frac{e^{\delta_{k,c}}}{\sum_{c'=1}^{C} e^{\delta_{k,c'}}} \quad \text{où} \quad \delta_{k,c} = \frac{n_k T_k' \theta^{(c)}}{\sigma^2} - \frac{\left(T_k' \theta^{(c)}\right)^2}{2\sigma^2} + \ln p_c \quad (\text{eq. 7})$$

D'un point de vue pratique, pour éviter d'être confronté à des nombres trop grands, il est possible de substituer $\delta_{k,c} - \max_{c'} \delta_{k,c'}$ à $\delta_{k,c}$, sans changer la valeur du quotient $\frac{e^{\delta_{k,c}}}{\sum_{c'=1}^{C} e^{\delta_{k,c'}}}$.

L'algorithme E-M consiste à itérer les étapes « E » (eq. 7) et « M » (eq. 6), l'étape « E » fournissant l'espérance des valeurs non observées $z_{k,c}$ à partir de valeurs courantes des paramètres $\Theta$, $\boldsymbol{p}$, $\sigma^2$, qui sont ensuite mises à jour dans l'étape « M » en remplaçant les $z_{k,c}$ par leurs espérances.

Les étapes « E » et « M » sont itérées jusqu'à ce qu'un critère de convergence soit respecté. L'algorithme E-M garantit une augmentation de la vraisemblance (plus précisément de la log-vraisemblance) des paramètres à chaque itération et sa convergence vers un maximum local.

L'initialisation de l'algorithme E-M est cruciale car elle a une influence sur le point de convergence final.

Il est possible d'initialiser aléatoirement les paramètres inconnus $\Theta$, $\boldsymbol{p}$, $\sigma^2$. Toutefois, pour le classement des niveaux d'impulsion, cette approche conduit parfois à des maxima locaux incorrects.

Une approche alternative plus efficace consiste à initialiser les paramètres inconnus $\Theta$, $\boldsymbol{p}$, $\sigma^2$ avec les résultats d'une méthode de regroupement standard de l'état de la technique. Par exemple, on utilise la méthode de regroupement fondée sur un algorithme de clustering spectral avec un graphe Laplacien normalisé, tel que décrit par exemple dans l'article U. von Luxburg, "A Tutorial on Spectral Clustering", Statistics and Computing, vol.17, n°4, 2007.

Le second mode de réalisation, qui va maintenant être présenté, constitue une extension de l'approche proposée ci-dessus en utilisant des mesures additionnelles.

L'incertitude sur la mesure d'azimut et l'écart angulaire entre deux émetteurs ne permet pas toujours de les distinguer. Cependant, les durées d'impulsions et surtout les fréquences se regroupent souvent autour de valeurs assez distinctes. Il est donc intéressant d'étendre le procédé pour tenir compte d'au moins une autre mesure d'une grandeur caractéristique d'une impulsion interceptée en plus du niveau des impulsions et de leur temps d'arrivée.

Le modèle introduit à l'équation 5 peut être étendu en considérant que les autres mesures, $x_{k,j}$ (avec $j$ entier entre 1 et $m$, et m le nombre de grandeurs supplémentaires), sont des mesures indépendantes du niveau, et distribuées selon une loi normale autour d'une moyenne, avec un bruit de mesure propre à chaque grandeur supplémentaire, mais constant dans la fenêtre d'analyse considérée.

Une telle modélisation correspond bien à la réalité dans les nombreux cas où la fréquence porteuse et la durée d'impulsion sont constantes dans un lobe. De même, on peut admettre que le modèle est valable pour l'azimut qui est supposé constant pendant une durée de lobe. Quand la fréquence ou la durée d'impulsion est agile, on admet également que le modèle est suffisamment robuste.

Pour la k-ème impulsion, le modèle de l'équation 4 s'étend de la manière suivante (en conservant les notations introduites précédemment) :

$$p(n_k, \boldsymbol{x}_k, \boldsymbol{z}_k | C, \boldsymbol{\Theta}, \boldsymbol{p}, \sigma^2, \boldsymbol{M}, \boldsymbol{\Lambda}) = \frac{1}{\sigma\sqrt{2\pi}} exp\left(-\frac{1}{2\sigma^2}[n_k - \right.$$

$$\left. \boldsymbol{T}'_k \boldsymbol{\Theta} \boldsymbol{z}'_k]^2\right) \frac{1}{(2\pi)^{\frac{m}{2}}|\boldsymbol{\Lambda}|^{\frac{1}{2}}} exp\left(-\frac{1}{2}(\boldsymbol{x}_k - \boldsymbol{M}\boldsymbol{z}'_k)'\boldsymbol{\Lambda}^{-1}(\boldsymbol{x}_k - \boldsymbol{M}\boldsymbol{z}'_k)\right) \prod_{c=1}^{C} p_c^{z_{k,c}} \qquad \text{(eq. 8)}$$

où $\boldsymbol{x}_k$ est le vecteur *(m, 1)* des *m* grandeurs additionnelles $x_{k,j}$ (j entier entre 1 et *m*) mesurées pour la k-ème impulsion (*m* vaut par exemple entre 1 et 3 selon le jeu des grandeurs additionnelles considérées parmi la fréquence, l'azimut et la durée d'impulsion) : $\boldsymbol{M}$ est la matrice *(m, C)* des valeurs moyennes des *m* paramètres dans les C groupes, et $\Lambda$ est la matrice diagonale des bruits de mesures sur les m grandeurs additionnelles.

Par rapport à l'équation 4, un facteur supplémentaire est incorporé. Il correspond à une loi normale pour le *m*-tuplet de mesures $\boldsymbol{x}_k$, qui est centrée sur les valeurs moyennes dans le groupe *c* par l'intermédiaire des variables indicatrices $z_{k,c}$, avec $c = 1... C$.

Les variances des bruits de mesures sur la diagonale de $\Lambda$ sont supposés constantes dans la fenêtre d'analyse, c'est pourquoi la matrice $\Lambda$ ne dépend pas de l'indice temporel *k*.

Le modèle complet pour les K mesures est le produit des densités individuelles de l'équation 8, soit :

$$p(\boldsymbol{n}, \boldsymbol{x}, \boldsymbol{Z} | C, \boldsymbol{\Theta}, \boldsymbol{p}, \sigma^2, \boldsymbol{M}, \boldsymbol{\Lambda}) = \prod_{k=1}^{K} p(n_k, \boldsymbol{x}_k, \boldsymbol{z}_k | C, \boldsymbol{\Theta}, \boldsymbol{p}, \sigma^2, \boldsymbol{M}, \boldsymbol{\Lambda}) \quad \text{(eq. 9)}$$

On peut montrer que les équations de l'étape « M » sont inchangées pour les paramètres $\Theta$, $\boldsymbol{p}$, $\sigma^2$ associés au niveau. Pour les grandeurs $\boldsymbol{M}$ et $\Lambda$, les équations de l'étape « M » sont les suivantes :

$$\boldsymbol{M}_{:c} = \frac{\sum_{k=1}^{K} z_{k,c} \boldsymbol{x}_k}{\sum_{k=1}^{K} z_{k,c}} \quad , \qquad c = 1 \dots C,$$

$$\Lambda_{j,j} = \frac{1}{K} \sum_{k=1}^{K} \left(x_{k,j}^2 - \sum_{c=1}^{C} z_{k,c} M_{j,c}^2\right), \quad j = 1 \dots m, \qquad \text{(eq. 10)}$$

Où $\boldsymbol{M}_{:c}$ désigne la c-ème colonne de $\boldsymbol{M}$ et $\Lambda_{jj}$ le j-ème terme diagonal de la matrice $\Lambda$.

Dans les itérations de l'algorithme E-M, les variables indicatrices $z_{k,c}$ sont remplacées par leurs espérances, obtenues par les équations de l'étape « E » suivantes :

$$E(z_{k,c}) = \frac{e^{\delta_{k,c}}}{\sum_{c'=1}^{C} e^{\delta_{k,c'}}} \qquad \text{(eq. 11)}$$

$$\text{Où } \delta_{k,c} = \frac{n_k T'_k \theta^{(c)}}{\sigma^2} - \frac{\left(T'_k \theta^{(c)}\right)^2}{2\sigma^2} + \ln p_c + \sum_{j=1}^{m} \frac{x_k(j) M_{j,c}}{\Lambda_{j,j}} - \frac{M_{j,c}^2}{2\Lambda_{j,j}}$$

Par rapport à l'équation 7, l'étape « E » est inchangée vis à vis des paramètres relatifs aux niveaux, mais des termes supplémentaires sont ajoutés pour tenir compte des autres grandeurs mesurées.

La figure 2 est une représentation sous forme de blocs d'un premier mode de réalisation du procédé selon l'invention, qui ne fait usage que des niveaux des impulsions et leurs temps d'arrivée.

Le procédé 100 prend en entrée un fichier d'enregistrements des mesures des grandeurs caractéristiques d'un ensemble d'impulsions.

A l'étape 110, la définition de fenêtres d'analyse permet de restreindre la quantité de données à traiter simultanément. Une pluralité de fenêtres d'analyse est ainsi définie. Chaque fenêtre contient une suite de K valeurs de temps d'arrivée, $t_k$, et de niveaux, $n_k$. L'entier K pouvant être différent d'une fenêtre à l'autre.

Les étapes suivantes du procédé 100 sont itérées sur chacune des fenêtres de la pluralité de fenêtres.

Pour la fenêtre courante, à l'étape 120, la valeur du nombre *C* de groupes est initialisée à une valeur minimale, par exemple *C*=1.

Les temps, les niveaux et le nombre de groupes constituent les entrées d'une étape 130 d'initialisation des valeurs des paramètres $\Theta$, $\boldsymbol{p}$, $\sigma^2$ (ces paramètres sont notés génériquement $\Omega$ sur la figure 2).

Puis, le procédé 100 entre dans les étapes qui correspondent à l'algorithme E-M.

A l'étape 140, correspondant à l'étape « E » de l'algorithme E-M, les espérances des variables indicatrices $z_{k,c}$ sont calculées en mettant en oeuvre l'équation 7 ci-dessus.

Puis, à l'étape 150, correspondant à l'étape « M » de l'algorithme E-M, l'espérance des variables indicatrices

$z_{k,c}$ obtenue à l'étape 140 est utilisée dans l'équation 6 ci-dessus pour mettre à jour les valeurs des paramètres $\Theta$, $\boldsymbol{p}$, $\sigma^2$.

A l'étape 160, un critère de convergence sur la vraisemblance des paramètres est testé.

Si ce critère de convergence n'est pas respecté, le procédé boucle à l'étape 140 en utilisant les valeurs des paramètres $\Theta$, $\boldsymbol{p}$, $\sigma^2$ pour mettre à jour l'espérance des $z_{k,c}$ de l'itération suivante.

Lorsque le critère de convergence est respecté, le procédé 100 passe à l'étape 170.

L'étape 170 est une étape de test d'un critère numérique sur le nombre $C$ de groupes à partir des temps, niveaux, paramètres $\Theta$, $\boldsymbol{p}$, $\sigma^2$ et espérances des variables indicatrices.

Différents critères permettant de choisir le nombre de groupes sont envisageables. Les plus répandus dans l'état de l'art sont des critères de type informatif qui pénalisent la log-vraisemblance, tels que le critère « Akaike information criterion » - AIC, le critère «*bayesian information criterion* » - BIC, ou encore le critère « Integrated Completed Likelihood » ICL. Le critère BIC donnant de bonnes performances, il est de préférence retenu.

Si le nombre $C$ courant n'a pas atteint sa valeur optimale conformément au critère retenue, il est incrémenté d'une unité (étape 180) et les étapes 130 à 160 sont recommencées.

Si au contraire, le nombre $C$ courant a atteint sa valeur optimale conformément au critère retenu, on dispose alors, en sortie du procédé 100, des résultats du regroupement, en particulier les valeurs des $z_{k,c}$, qui indique à quel groupe appartient l'impulsion k.

Avec *m* grandeurs en plus du niveau, le procédé reste conforme au schéma blocs de la figure 2, avec cependant un nombre de paramètres plus important, et les itérations des étapes E et M mettent en oeuvre les équations 11 et 10 respectivement, au lieu des équations 7 et 6. Elles permettent de mettre à jour les moyennes et variance des paramètres additionnels au fil des itérations « E » et « M », en plus des paramètres du modèle de régression.

Le procédé pré-sélectionne des fenêtres d'analyse dont les durées sont limitées et qui peuvent éventuellement correspondre à des sous-bandes de la bande de fréquence d'écoute, pour que l'approximation d'une forme de lobe indépendante de la fréquence soit acceptable.

Dans les fenêtres d'analyse, le procédé exploite un modèle de régression quadratique sur les niveaux des impulsions, couplé à un modèle de mélange de sources, pour mettre un oeuvre une méthode itérative d'estimation des paramètres (coefficients de la régression, bruit de mesure, proportions du mélange) selon un principe du maximum de vraisemblance.

Le procédé est facilement généralisable pour réaliser le regroupement des impulsions en utilisant d'autres grandeurs que les niveaux et temps d'arrivée des impulsions, notamment leur fréquence porteuse, leur azimut ou leur durée. On considère alors que les grandeurs supplémentaires sont des constantes bruitées mesurées indépendamment du niveau dans les fenêtres d'analyse.

Avantageusement, le procédé selon l'invention apporte un complément utile aux méthodes actuelles de désentrelacement, supervisé ou non supervisé, et de pistage des lobes radar.

Il est à noter que les méthodes de l'état de l'art en intelligence artificielle n'utilisent pas le niveau des impulsions en raison de la grande variabilité de cette grandeur, qui est liée à la puissance de l'émetteur et à sa distance au système d'écoute, aux conditions d'interceptions (multitrajets, etc.), ainsi qu'au bruit de mesure.

**Revendications**

1. Procédé de regroupement des impulsions interceptées par un système d'écoute mis en oeuvre par des moyens de calcul d'un calculateur, en analysant un fichier d'enregistrements comportant des mesures de grandeurs associées à chacune des impulsions interceptées, les grandeurs associées à l'impulsion interceptée d'indice *k* comportant au moins un niveau $n_k$ et un temps d'arrivée $t_k$, ledit procédé regroupant les impulsions interceptées dans $C$ groupes, $C$ étant un entier égal ou supérieur à 1, les impulsions regroupées dans un groupe étant considérées comme ayant été émises par une même source munie d'une antenne radar fonctionnant en balayage, **caractérisé en ce que** le procédé de regroupement comporte les étapes consistant à :

   - sélectionner, à partir du fichier d'enregistrements, des fenêtres d'analyse de durée limitée pour réduire le nombre d'impulsions à analyser simultanément, une fenêtre comportant $K$ impulsions, $K$ étant un entier égal ou supérieur à 3 ; et, pour chaque fenêtre d'analyse,
   - mettre en oeuvre, à partir d'une modélisation fondée sur une régression quadratique des niveaux des impulsions en fonction du temps d'arrivée des impulsions interceptées appartenant à un même groupe, couplée à un modèle de mélange des groupes, ladite modélisation pouvant se mettre sous la forme :

$$n_k = \begin{cases} \boldsymbol{T}'_k \boldsymbol{\theta}^{(1)} + w_k & \text{si} \quad z_{k,1} = 1 \\ \qquad \dots \\ \boldsymbol{T}'_k \boldsymbol{\theta}^{(C)} + w_k & \text{si} \quad z_{k,C} = 1 \end{cases}, \quad k = 1 \dots K$$

où $\boldsymbol{T_k}$ est le vecteur de taille $\begin{pmatrix} t_k^2 \\ t_k \\ 1 \end{pmatrix}$, où $\theta^{(c)} = (\alpha^{(c)}, \beta^{(c)}, \gamma^{(c)})$, $c = 1 \dots C$, où $w_k$ est une suite d'échantillons de bruit, et où les variables indicatrices $z_{k,c}$ valent 1 si la k-ème impulsion appartient au groupe c et 0 sinon, un algorithme itératif d'estimation des paramètres de la modélisation selon un principe de maximisation d'une vraisemblance, les paramètres de la modélisation étant constitués par le nombre de groupes $C$, les coefficients de la régression quadratique $\theta^{(c)}$ pour chaque groupe c, d'une variance du bruit de mesure $\sigma^2$, et les variables indicatrices du mélange $z_{k,c}$ ; et,
- regrouper les impulsions selon les valeurs estimées des variables indicatrices du mélange.

2. Procédé selon la revendication 1, dans lequel le nombre de groupes $C$ est estimé séparément, en considérant successivement plusieurs hypothèses sur la valeur de C.

3. Procédé selon la revendication 1 ou la revendication 2, dans lequel les paramètres de la modélisation que sont les coefficients de la régression quadratique pour chaque groupe, de la variance du bruit de mesure, et les variables indicatrices du mélange sont estimées en utilisant un algorithme « Expectation-Maximization » - E-M, consistant à itérer successivement une étape « M » et une étape « E », l'étape « M » consistant à calculer :

$$\hat{\boldsymbol{p}} = \frac{1}{K} \sum_{k=1}^{K} \boldsymbol{z}_k \ ,$$

$$\widehat{\sigma^2} = \frac{1}{K} \sum_{k=1}^{K} \left( n_k - \boldsymbol{T}'_k \widehat{\boldsymbol{\theta}} \boldsymbol{z}'_k \right)^2 \ ,$$

$$\widehat{\boldsymbol{\theta}^{(c)}} = \left( \sum_{k=1}^{K} z_{k,c} \boldsymbol{T}_k \boldsymbol{T}'_k \right)^{-1} \left( \sum_{k=1}^{K} z_{k,c} n_k \boldsymbol{T}_k \right) \ , \quad c = 1 \dots C$$

où $\hat{\boldsymbol{p}}$ est l'estimation du vecteur $\boldsymbol{p} = (p_1,\dots,p_c,\dots, p_c)$ des probabilités marginales des $C$ groupes, $\widehat{\sigma^2}$ est l'estimation de la variance du bruit de mesure;
et l'étape « E » consistant à calculer les espérances $E(z_{k,c})$ des valeurs des variables indicatrices $z_{k,c}$, selon les relations suivantes:

$$E\left( z_{k,c} \right) = \frac{e^{\delta_{k,c}}}{\sum_{c'=1}^{C} e^{\delta_{k,c'}}} \quad \text{où} \quad \delta_{k,c} = \frac{n_k \boldsymbol{T}'_k \boldsymbol{\theta}^{(c)}}{\sigma^2} - \frac{\left( \boldsymbol{T}'_k \boldsymbol{\theta}^{(c)} \right)^2}{2\sigma^2} + \ln p_c$$

puis à substituer aux valeurs des variables indicatrices $z_{k,c}$ leurs espérances $E(z_{k,c})$ pour l'itération suivante de l'étape « M ».

4. Procédé selon la revendication 3, dans lequel l'initialisation de l'algorithme E-M consiste soit à initialiser aléatoirement les paramètres $\Theta, \boldsymbol{p}, \sigma^2$, *soit* à initialiser les paramètres $\Theta, \boldsymbol{p}, \sigma^2$ avec les résultats d'une méthode de regroupement standard.

5. Procédé selon l'une quelconque des revendications précédentes, dans lequel les grandeurs comportent au moins une grandeur supplémentaire, de préférence sélectionnée parmi un azimut, une durée d'impulsion et une fréquence porteuse d'une impulsion interceptée.

6. Procédé selon la revendication 5 en combinaison avec la revendication 3, dans lequel, pour tenir compte de la j-ème grandeur supplémentaire $x_{k,j}$ parmi $m$ grandeurs supplémentaires, dans les itérations de l'algorithme E-M,

l'étape « M » consiste à calculer également :

$$M_{:c} = \frac{\sum_{k=1}^{K} z_{k,c} x_k}{\sum_{k=1}^{K} z_{k,c}} \quad , \qquad c = 1 \dots C,$$

$$\Lambda_{j,j} = \frac{1}{K} \sum_{k=1}^{K} \left( x_{k,j}^2 - \sum_{c=1}^{C} z_{k,c} M_{j,c}^2 \right) , \; j = 1 \dots m$$

Où $M_{:c}$ désigne la c-ème colonne de $M$ et $\Lambda_{j,j}$ le j-ème terme diagonal de $\Lambda$, et l'étape « E » consiste à calculer :

$$E\left( z_{k,c} \right) = \frac{e^{\delta_{k,c}}}{\sum_{c'=1}^{C} e^{\delta_{k,c'}}}$$

$$\text{Où } \delta_{k,c} = \frac{n_k T_k' \theta^{(c)}}{\sigma^2} - \frac{\left( T_k' \theta^{(c)} \right)^2}{2\sigma^2} + \ln p_c + \sum_{j=1}^{m} \frac{x_k(j) M_{j,c}}{\Lambda_{j,j}} - \frac{M_{j,c}^2}{2\Lambda_{j,j}} .$$

7. Procédé selon l'une quelconque des revendications précédentes, dans lequel une fenêtre d'analyse est définie pour chaque sous-bande du domaine de fréquence sur lequel fonctionne le système d'écoute.

8. Procédé selon l'une quelconque des revendications précédentes, dans lequel le regroupement est réalisé sans aucune information sur les formes d'onde des impulsions interceptées.

9. Produit programme d'ordinateur comprenant un support lisible d'informations, sur lequel est mémorisé un programme d'ordinateur comprenant des instructions de programme, le programme d'ordinateur étant chargeable dans des moyens de mémorisation d'un calculateur et exécutable par des moyens de calcul dudit calculateur pour mettre en oeuvre un procédé de regroupement selon l'une quelconque des revendications 1 à 8.

10. Support lisible d'informations sur lequel est mémorisé un programme d'ordinateur comprenant des instructions de programme, le programme d'ordinateur étant chargeable dans des moyens de mémorisation d'un calculateur et exécutable par des moyens de calcul dudit calculateur pour mettre en oeuvre un procédé de regroupement conforme à l'une quelconque des revendications 1 à 8.

**Patentansprüche**

1. Verfahren zum Gruppieren von Impulsen, die von einem Abhörsystem abgefangen werden, das von Rechenmitteln eines Rechners implementiert wird, indem eine Datei mit Aufzeichnungen analysiert wird, die Messungen von Größen umfassen, die mit jedem der abgefangenen Impulse assoziiert sind, die mit dem abgefangenen Impuls mit dem Index $k$ assoziierten Größen umfassend mindestens einen Pegel $n_k$ und eine Ankunftszeit $t_k$, wobei das Verfahren die abgefangenen Impulse in $C$ Gruppen zusammenfasst, wobei C eine ganze Zahl gleich wie oder größer als 1 ist, wobei davon ausgegangen wird, dass die in einer Gruppe zusammengefassten Impulse von derselben Quelle ausgesendet wurden, die mit einer Radarantenne versehen ist, die als Abtastung arbeitet, **dadurch gekennzeichnet, dass** das Zusammenfassungsverfahren die Schritte umfasst, die aus Folgenden bestehen:

- Auswählen, anhand der Aufzeichnungsdatei, von Analysefenstern mit begrenzter Dauer, um die Anzahl der gleichzeitig zu analysierenden Impulse zu reduzieren, ein Fenster umfassend K Impulse, wobei $K$ eine ganze Zahl gleich wie oder größer als 3 ist; und für jedes Analysefenster
- Implementieren, ausgehend von einem Modell, das auf einer quadratischen Regression der Impulspegel abhängig von der Ankunftszeit der abgefangenen Impulse basiert, die zu einer gleichen Gruppe gehören, gekoppelt mit einem Mischmodell der Gruppen, wobei das Modell in folgender Form vorliegen kann:

$$n_k = \begin{cases} T_k' \theta^{(1)} + w_k & \text{si} \quad z_{k,1} = 1 \\ \quad \dots \\ T_k' \theta^{(C)} + w_k & \text{si} \quad z_{k,C} = 1 \end{cases} , \quad k = 1 \dots K$$

wobei $T_k$ der Vektor der Größe $\begin{pmatrix} t_k^2 \\ t_k \\ 1 \end{pmatrix}$, ist, wobei $\theta^{(c)} = (\alpha^{(c)}, \beta^{(c)}, \gamma^{(c)})$, $c = 1 \dots C$, wobei $w_k$ eine Folge von Rauschabtastungen ist, und wobei die Indikatorvariablen $z_{k,c}$ 1 sind, wenn der k-te Impuls zu der Gruppe c gehört, und sonst 0, einen iterativen Algorithmus zur Schätzung der Modellparameter nach dem Prinzip der Maximierung einer Wahrscheinlichkeit, wobei die Modellparameter aus der Anzahl der Gruppen C, den Koeffizienten der quadratischen Regression $\theta^{(c)}$ für jede Gruppe c, einer Varianz des Messrauschens $\sigma^2$ und den Indikatorvariablen der Mischung $z_{k,c}$ bestehen; und,

- Zusammenfassen der Impulse nach den geschätzten Werten der Variablen, die auf die Mischung hinweisen.

**2.** Verfahren nach Anspruch 1, wobei die Anzahl der Gruppen *C* separat geschätzt wird, indem nacheinander mehrere Annahmen über den Wert von *C* berücksichtigt werden.

**3.** Verfahren nach Anspruch 1 oder 2, wobei die Modellparameter Koeffizienten der quadratischen Regression für jede Gruppe, Varianz des Messrauschens und Indikatorvariablen für die Mischung unter Verwendung eines Algorithmus "Expectation-Maximization" - E-M geschätzt werden, der darin besteht, nacheinander einen Schritt "M" und einen Schritt "E" zu iterieren, wobei Schritt "M" darin besteht, zu berechnen, ob die Varianz des Messrauschens und die Indikatorvariablen für die Mischung gleich sind:

$$\widehat{p} = \frac{1}{K} \sum_{k=1}^{K} z_k \ ,$$

$$\widehat{\sigma^2} = \frac{1}{K} \sum_{k=1}^{K} \left( n_k - T_k' \widehat{\Theta} z_k' \right)^2 \ ,$$

$$\widehat{\theta^{(c)}} = \left( \sum_{k=1}^{K} z_{k,c} T_k T_k' \right)^{-1} \left( \sum_{k=1}^{K} z_{k,c} n_k T_k \right) \ , \quad c = 1 \dots C$$

wobei $\overset{\wedge}{p}$ die Schätzung des Vektors $p = (p_1, \dots, p_c, \dots, pc)$ der Randwahrscheinlichkeiten der *C* Gruppen $\widehat{\sigma^2}$ die Schätzung der Varianz des Messrauschens ist;

und Schritt "E" daraus besteht, die Erwartungswerte $E(z_{k,c})$ der Werte der Indikatorvariablen $z_{k,c}$ gemäß den folgenden Beziehungen zu berechnen:

$$E\left( z_{k,c} \right) = \frac{e^{\delta_{k,c}}}{\sum_{c'=1}^{C} e^{\delta_{k,c'}}} \quad \textbf{wobei} \quad \delta_{k,c} = \frac{n_k T_k' \theta^{(c)}}{\sigma^2} - \frac{\left( T_k' \theta^{(c)} \right)^2}{2\sigma^2} + \ln p_c$$

und dann die Werte der Indikatorvariablen $z_{k,c}$ durch ihre Erwartungswerte $E(z_{k,c})$ für die nächste Iteration des Schritts "M" zu ersetzen.

**4.** Verfahren nach Anspruch 3, wobei die Initialisierung des Algorithmus E-M entweder aus einer zufälligen Initialisierung der Parameter $\Theta$, *p,* $\sigma^2$ oder einer Initialisierung der Parameter $\Theta$, *p,* $\sigma^2$ mit den Resultaten eines standardmäßigen Zusammenfassungsverfahrens besteht.

**5.** Verfahren nach einem der vorherigen Ansprüche, wobei die Größen mindestens eine zusätzliche Größe umfassen, die vorzugsweise ausgewählt ist aus einem Azimut, einer Impulsdauer und einer Trägerfrequenz eines abgefangenen Impulses.

**6.** Verfahren nach Anspruch 5 in Kombination mit Anspruch 3, wobei zur Berücksichtigung der j-ten zusätzlichen Größe $x_{k,j}$ von m zusätzlichen Größen, in den Iterationen des Algorithmus E-M

der Schritt "M" besteht darin, auch Folgendes zu berechnen:

$$M_{:c} = \frac{\sum_{k=1}^{K} z_{k,c} x_k}{\sum_{k=1}^{K} z_{k,c}} \quad , \qquad c = 1 \dots C,$$

$$\Lambda_{j,j} = \frac{1}{K} \sum_{k=1}^{K} \left( x_{k,j}^2 - \sum_{c=1}^{C} z_{k,c} M_{j,c}^2 \right) , \quad j = 1 \dots m$$

wobei $\boldsymbol{M}_{:c}$ die c-te Spalte von $\boldsymbol{M}$ und $\Lambda_{j,j}$ der j-te Diagonalterm von $\Lambda$ ist, und Schritt "E" darin besteht, Folgendes zu berechnen:

$$E(z_{k,c}) = \frac{e^{\delta_{k,c}}}{\sum_{c'=1}^{C} e^{\delta_{k,c'}}}$$

wobei

$$\delta_{k,c} = \frac{n_k T_k' \boldsymbol{\theta}^{(c)}}{\sigma^2} - \frac{\left( T_k' \boldsymbol{\theta}^{(c)} \right)^2}{2\sigma^2} + \ln p_c + \sum_{j=1}^{m} \frac{x_k(j) M_{j,c}}{\Lambda_{j,j}} - \frac{M_{j,c}^2}{2\Lambda_{j,j}}$$

7. Verfahren nach einem der vorherigen Ansprüche, wobei ein Analysefenster für jedes Unterband des Frequenzbereichs, in dem das Abhörsystem arbeitet, definiert ist.

8. Verfahren nach einem der vorherigen Ansprüche, wobei die Gruppierung ohne jegliche Information über die Wellenformen der abgefangenen Impulse durchgeführt wird.

9. Computerprogrammprodukt, umfassend einen lesbaren Informationsträger, auf dem ein Computerprogramm mit Programmanweisungen gespeichert ist, wobei das Computerprogramm in eine Speichereinrichtung eines Rechners geladen und durch eine Recheneinrichtung des Rechners ausgeführt werden kann, um ein Clusterverfahren nach einem der Ansprüche 1 bis 8 durchzuführen.

10. Lesbarer Informationsträger, auf dem ein Computerprogramm umfassend Programmanweisungen gespeichert ist, wobei das Computerprogramm in eine Speichereinrichtung eines Rechners geladen und durch eine Recheneinrichtung des Rechners ausgeführt werden kann, um ein Clusterverfahren nach einem der Ansprüche 1 bis 8 durchzuführen.

**Claims**

1. Method of grouping pulses intercepted by a listening system implemented by computing means of a computer, by analysing a file of recordings comprising measurements of magnitudes associated with each of the intercepted pulses, the magnitudes associated with the intercepted pulse of index $k$ comprising at least one level $n_k$ and an arrival time $t_k$, said method grouping the intercepted pulses into $C$ groups, C being an integer equal to or greater than 1, the pulses grouped in a group being considered as having been transmitted by the same source provided with a radar antenna operating in scanning mode, **characterized in that** the grouping method comprises the steps consisting of:

- selecting, from the record file, analysis windows of limited duration to reduce the number of pulses to be analysed simultaneously, a window comprising K pulses, $K$ being an integer equal to or greater than 3; and, for each analysis window,
- implementing, from a modelling based on a quadratic regression of the levels of the pulses as a function of the arrival time of the intercepted pulses belonging to the same group, coupled with a mixing model of the groups, said modelling being able to be put in the form:

$$n_k = \begin{cases} T_k' \boldsymbol{\theta}^{(1)} + w_k & \text{si} \quad z_{k,1} = 1 \\ \dots \\ T_k' \boldsymbol{\theta}^{(C)} + w_k & \text{si} \quad z_{k,C} = 1 \end{cases} , \quad k = 1 \dots K$$

where $T_k$ is the vector of size $\begin{pmatrix} t_k^2 \\ t_k \\ 1 \end{pmatrix}$ where $\theta^{(c)} = (\alpha^{(c)}, \beta^{(c)}, \gamma^{(c)})$, $c = 1 \dots C$, where $w_k$ is a sequence of noise samples, and where the indicator variables $z_{k,c}$ are 1 if the k-th pulse belongs to group c and 0 otherwise, an iterative algorithm for estimating the modelling parameters according to a likelihood maximisation principle, the modelling parameters consisting of the number of groups $C$, the coefficients of the quadratic regression $\theta^{(c)}$ for each group c, a variance of the measurement noise $\sigma^2$, and the indicator variables of the mixture $z_{k,c}$; and,
- group the pulses according to the estimated values of the mixture indicator variables.

2. The method according to claim 1, wherein the number of groups $C$ is estimated separately, by successively considering several assumptions on the value of $C$.

3. A method according to claim 1 or claim 2, in which the parameters of the modelling which are the coefficients of the quadratic regression for each group, the variance of the measurement noise, and the indicator variables of the mixture are estimated using an "Expectation-Maximization" - E-M - algorithm, consisting of iterating successively an "M" step and an "E" step, the "M" step consisting of calculating:

$$\widehat{p} = \frac{1}{K}\sum_{k=1}^{K} z_k \ ,$$

$$\widehat{\sigma^2} = \frac{1}{K}\sum_{k=1}^{K}\left(n_k - T_k'\widehat{\Theta}z_k'\right)^2 \ ,$$

$$\widehat{\theta^{(c)}} = \left(\sum_{k=1}^{K} z_{k,c}T_kT_k'\right)^{-1}\left(\sum_{k=1}^{K} z_{k,c}n_kT_k\right) \ , \quad c = 1 \dots C$$

where $\widehat{p}$ is the estimate of the vector $p = (p_1, \dots, p_c, \dots, p_c)$ of the marginal probabilities of the $C$ groups, $\widehat{\sigma^2}$ is the estimate of the variance of the measurement noise;
and the step "E" consisting of calculating the expectations $E(z_{k,c})$ of the values of the indicator variables $z_{k,c}$, according to the following relations:

$$E\left(z_{k,c}\right) = \frac{e^{\delta_{k,c}}}{\sum_{c'=1}^{C} e^{\delta_{k,c'}}} \text{ where } \delta_{k,c} = \frac{n_k T_k'\theta^{(c)}}{\sigma^2} - \frac{\left(T_k'\theta^{(c)}\right)^2}{2\sigma^2} + \ln p_c$$

then substituting the values of the indicator variables $z_{k,c}$ with their expectations $E(z_{k,c})$ for the next iteration of the "M" step.

4. The method according to claim 3, wherein the initialization of the E-M algorithm consists of either randomly initializing the parameters $\Theta$, $p$, $\sigma^2$, or initializing the parameters $\Theta$, $p$, $\sigma^2$ with the results of a standard clustering method.

5. A method according to any of the preceding claims, wherein the quantities comprise at least one additional quantity, preferably selected from an azimuth, a pulse duration and a carrier frequency of an intercepted pulse.

6. The method according to claim 5 in combination with claim 3, wherein, in order to take into account the j-th additional quantity $x_{k,j}$ among $m$ additional quantities, in the iterations of the E-M algorithm,

the "M" step is also to calculate:

$$M_{:c} = \frac{\sum_{k=1}^{K} z_{k,c}x_k}{\sum_{k=1}^{K} z_{k,c}} \ , \qquad c = 1 \dots C,$$

$$\Lambda_{j,j} = \frac{1}{K}\sum_{k=1}^{K}\left(x_{k,j}^2 - \sum_{c=1}^{C} z_{k,c}M_{j,c}^2\right) \ , \ j = 1 \dots m$$

Where $\boldsymbol{M}_{.c}$ denotes the c-th column of $\boldsymbol{M}$ and $\Lambda_{j,j}$ the j-th diagonal term of $\Lambda$, and step "E" is to calculate:

$$E\left(z_{k,c}\right) = \frac{e^{\delta_{k,c}}}{\sum_{c'=1}^{C} e^{\delta_{k,c'}}}$$

Where

$$\delta_{k,c} = \frac{n_k T'_k \boldsymbol{\theta}^{(c)}}{\sigma^2} - \frac{\left(T'_k \boldsymbol{\theta}^{(c)}\right)^2}{2\sigma^2} + \ln p_c + \sum_{j=1}^{m} \frac{x_k(j) M_{j,c}}{\Lambda_{j,j}} - \frac{M_{j,c}^2}{2\Lambda_{j,j}}$$

7. A method according to any of the preceding claims, wherein an analysis window is defined for each sub-band of the frequency domain over which the listening system operates.

8. A method according to any of the preceding claims, wherein the grouping is performed without any information about the waveforms of the intercepted pulses.

9. A computer program product comprising a readable information carrier having stored thereon a computer program comprising program instructions, the computer program being loadable into storage means of a computer and executable by computing means of said computer to implement a grouping method according to any of claims 1 to 8.

10. A readable information carrier having stored thereon a computer program comprising program instructions, the computer program being loadable into storage means of a computer and executable by computing means of said computer to implement a grouping method according to any of claims 1 to 8.

[Fig 1]

[Fig 2]

**Fichier d'enregistrements**

110 — **Pré-sélection de fenêtres d'analyse**

$(t_k), k=1...K$ | $(n_k), k=1...K$

100

120 — **Choix d'un nombre C de groupes minimal**

130 — **Initialisation** — C

$(t_k)$ | $(n_k)$

$\Omega$:
$\Theta^{(c)}, P_c,$
$c=1...C,$ et $\sigma^2$

180 — **C ← C+1**

140 — **Calcul des espérances des variables indicatrices $z_{k,c}$ k=1...K, c=1...C selon éq. 7** — $\Omega$

$(t_k)$ | $(n_k)$ | $\Omega$ | $E(z_{k,c})$

150 — **Mise à jour de $\Omega$ selon éq. 6**

160 — **Critere sur $\Omega$** — N

$(t_k)$ | $(n_k)$ | Y $\Omega$ | $E(z_{k,c})$

170 — **Critère sur C** — N

Y

**Résultat de classification**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006132348 A1
- US 2019162818 A1

- CN 109799483 A

**Littérature non-brevet citée dans la description**

- **B. BARSHAN ; B. ERAVCI.** Automatic Radar Antenna Scan Type Recognition in Electronic Warfare. *IEEE Transactions on Aerospace and Electronic Systems,* Octobre 2012, vol. 48 (4), 2908-2931

- **A.P. DEMPSTER et al.** Maximum Likelihood from incomplète Data via the EM Algoithm. *J. Roy. Satist.,* 1977, vol. B-39, 1-38
- **U. VON LUXBURG.** A Tutorial on Spectral Clustering. *Statistics and Computing,* 2007, vol. 17 (4